# DEMANDE DE BREVET EUROPEEN

(11) **EP 3 943 713 A1**
(43) Date de publication de la demande: **26.01.2022**
(21) Numéro de dépôt: 21194926.8
(22) Date de dépôt: 01.04.2015
(51) Int. Cl.: F01D 17/16, F04D 29/32, F02C 7/28, F04D 29/56, F04D 29/10, F01D 11/00, F01D 9/04, F01D 11/02

(54) **COMPRESSEUR DE TURBOMACHINE À AUBES À CALAGE VARIABLE**

(30) Priorité: 08.04.2014 FR 1453128
(62) Demande divisionnaire de: 15718532.3
(71) Demandeur: Safran Helicopter Engines, 64510 Bordes (FR)
(72) Inventeur: IMBOURG, Frédéric, 77550 MOISSY-CRAMAYEL (FR); NECTOUTE, Philippe, 77550 MOISSY-CRAMAYEL (FR); HERRAN, Mathieu, 77550 MOISSY-CRAMAYEL (FR)
(74) Mandataire: Gevers & Orès

(57) **Abrégé**

Compresseur (10') de turbomachine, comportant au moins une rangée annulaire d'aubes de stator (12) à calage variable, ces aubes étant sensiblement radiales et comportant à leurs extrémités radiales des pivots (22, 24), les pivots radialement externes des aubes étant logés dans des premiers orifices d'un carter de stator (20) et les pivots radialement internes étant logés dans des seconds orifices d'un anneau flottant (60) qui entoure un rotor (18) du compresseur, caractérisé en ce qu'une pièce annulaire (62) de stator est intercalée entre l'anneau flottant et le rotor du compresseur, et en ce que des premiers moyens d'étanchéité sont montés entre la pièce de stator et le rotor du compresseur, et des seconds moyens d'étanchéité sont montés entre l'anneau flottant et la pièce de stator.

## Description

### DOMAINE TECHNIQUE

La présente invention concerne un compresseur de turbomachine, en particulier d'aéronef, et plus précisément un compresseur de turbomachine comportant au moins une rangée annulaire d'aubes de stator à calage variable.

### ETAT DE L'ART

Dans un compresseur de turbomachine, une rangée annulaire ou une grille d'aubes de stator à calage variable est montée en amont ou en aval d'une roue de rotor du compresseur, pour former un étage de compression. Les aubes à calage variable sont portées par le stator du compresseur et sont réglables en position autour d'axes radiaux pour optimiser l'écoulement des gaz dans le moteur de la turbomachine. Ces aubes sont couramment appelées aubes IGV, IGV étant l'acronyme de *Inlet Guide Vane.*

Les aubes à calage variable d'un compresseur de turbomachine sont sensiblement radiales et comportent à leurs extrémités radiales des pivots sensiblement cylindriques. Les pivots radialement externes des aubes sont logés dans des premiers orifices d'un carter de stator du compresseur, et leurs pivots radialement internes sont logés dans des seconds orifices d'un anneau fixe ou flottant, qui entoure le rotor du compresseur. Un anneau est fixe lorsqu'il est solidaire du stator, et est flottant lorsqu'il est indépendant du stator et peut donc se déplacer par rapport au stator. Les pivots des aubes sont guidés en rotation dans leurs orifices de logement par l'intermédiaire de douilles entourant les pivots.

Chaque aube peut être déplacée en rotation autour de l'axe défini par ses pivots. Ce déplacement est en général assuré par un actionneur qui est monté sur le carter de stator et qui est relié à un anneau de commande qui est lui-même relié aux pivots radialement externes des aubes par l'intermédiaire de biellettes. La rotation de l'anneau de commande est transmise par les biellettes aux pivots externes des aubes et les fait tourner autour de leurs axes.

En fonctionnement, lors de la rotation des aubes à calage variable autour de leurs axes, les pivots des aubes frottent sur les douilles. L'utilisation d'un anneau flottant plutôt qu'un anneau fixe permet de réduire les efforts d'interface sur les pivots internes des aubes et ainsi limiter les usures de ces pivots par frottement sur leurs douilles.

L'anneau flottant est intercalé radialement entre les aubes à calage variable et le rotor du compresseur et sa périphérie externe définit le diamètre interne de la veine d'écoulement d'air dans le compresseur. Le diamètre externe de la veine est défini par le carter de stator précité. Une augmentation du débit d'air du compresseur peut se faire par une augmentation de sa section de passage au niveau de la rangée d'aubes à calage variable, qui peut donc se faire soit par une augmentation du diamètre externe de la veine soit par une réduction de son diamètre interne, soit par les deux. L'augmentation du diamètre externe de la veine n'est pas une bonne solution car cela se traduit par une augmentation du diamètre externe du carter de stator et donc une augmentation de son encombrement, ainsi que par des pertes de performances liés à l'augmentation du nombre de Mach en tête (et une difficulté pour dimensionner mécaniquement la roue mobile en aval liée à l'augmentation de la vitesse périphérique). L'autre solution consiste donc à diminuer le diamètre interne de la veine. Cependant, cette solution est difficile à mettre en œuvre dans la technologie précitée utilisant un anneau flottant.

En effet, pour éviter la recirculation d'air, depuis l'aval vers l'amont, entre l'anneau flottant et le rotor, des moyens d'étanchéité à l'air sont intercalés entre l'anneau flottant et le rotor. Ces moyens d'étanchéité comprennent en général un joint à labyrinthe qui comporte des léchettes annulaires portées par le rotor et coopérant avec une couche annulaire de matière abradable portée par l'anneau flottant. Ces moyens d'étanchéité sont relativement encombrants, en particulier en direction radiale, ce qui empêche une réduction du diamètre interne de la veine de compresseur.

Par ailleurs, des moyens d'étanchéité supplémentaires sont en général prévus dans cette zone proche d'une enceinte palier contenant de l'huile. Ces moyens d'étanchéité supplémentaires comprennent deux autres joints à labyrinthe, qui sont espacés axialement l'un de l'autre et définissent entre eux une cavité annulaire destinée à être alimenté en air comprimé. Le rotor du compresseur est tubulaire et comprend sur sa paroi un orifice radial dont l'extrémité radialement externe débouche dans la cavité pour son alimentation en air comprimé, cet air étant destiné à s'écouler vers l'amont et vers l'aval et à traverser les deux joints à labyrinthe définissant la cavité, pour empêcher le passage d'huile à travers ces joints. Les moyens d'étanchéité supplémentaires sont ainsi des moyens d'étanchéité pour éviter les fuites d'huile. L'huile provient d'une enceinte de lubrification située à l'amont des moyens d'étanchéité, et dans laquelle est logé un palier de guidage du rotor du compresseur.

Les moyens d'étanchéité pour éviter les fuites d'huile de l'enceinte ne sont pas configurés pour assurer l'étanchéité entre l'anneau flottant et le rotor, de façon à éviter la recirculation d'air, depuis l'aval vers l'amont. Il n'est donc pas envisageable de supprimer simplement les moyens d'étanchéité à l'air pour pouvoir envisager une réduction du diamètre interne de la veine de compresseur.

La présente invention propose une solution simple, efficace et économique au problème de la technique antérieure.

### EXPOSE DE L'INVENTION

L'invention propose un compresseur de turbomachine, comportant au moins une rangée annulaire d'aubes de stator à calage variable, ces aubes étant sensiblement radiales et comportant à leurs extrémités radiales des pivots, les pivots radialement externes des aubes étant logés dans des premiers orifices d'un carter de stator et les pivots radialement internes étant logés dans des seconds orifices d'un anneau flottant qui entoure un rotor du compresseur, caractérisé en ce qu'une pièce annulaire de stator est intercalée entre l'anneau flottant et le rotor du compresseur, et en ce que des premiers moyens d'étanchéité sont montés entre la pièce de stator et le rotor du compresseur, et des seconds moyens d'étanchéité sont montés entre l'anneau flottant et la pièce de stator.

L'anneau flottant n'est ainsi plus monté directement autour d'un rotor de compresseur mais est au contraire monté directement autour d'une pièce de stator qui, elle, entoure le rotor de compresseur. Selon l'invention, les (premiers) moyens d'étanchéité, qui sont de préférence des systèmes à fuite d'air calibrée pour éviter des fuites d'huile, sont montés entre la pièce de stator et le rotor du compresseur, et les (seconds) moyens d'étanchéité, qui sont de préférence des moyens d'étanchéité mécanique, sont montés entre l'anneau flottant et la pièce de stator. Ces derniers moyens d'étanchéité autorisent des déplacements relatifs de l'anneau flottant vis-à-vis de la pièce de stator en fonctionnement, qui sont essentiellement des déplacements en direction axiale et en direction tangentielle (les déplacements en direction radiale étant de relativement faibles amplitudes). Bien que l'anneau flottant puisse se déplacer, il fait partie du stator du compresseur. Les seconds moyens sont ainsi destinés à assurer une étanchéité entre deux parties de stator et peuvent donc être beaucoup moins encombrants que ceux utilisés dans la technique antérieure pour assurer une étanchéité entre une partie de stator et une partie de rotor.

Les premiers moyens d'étanchéité peuvent être du type à labyrinthe ou à bagues carbones et définir une cavité annulaire configurée pour être alimentée en air sous pression

Selon un mode de réalisation de l'invention, les seconds moyens d'étanchéité comprennent au moins un joint annulaire ou au moins un segment annulaire, qui est logé dans une gorge de la pièce de stator et qui coopère à étanchéité avec l'anneau flottant, ou inversement.

Les seconds moyens d'étanchéité comprennent par exemple deux segments annulaires adjacents et logés dans une même gorge annulaire.

De préférence, le ou les segments annulaires coopèrent avec une partie de l'anneau flottant qui est recouverte d'un revêtement anti friction.

Le compresseur selon l'invention peut être un compresseur axial, un compresseur centrifuge ou un compresseur mixte. Ainsi, un rouet de compresseur centrifuge ou une rangée annulaire d'aubes de rotor de compresseur axial peut être monté en aval de la rangée d'aubes à calage variable.

La présente invention concerne encore une turbomachine, caractérisée en ce qu'elle comprend un compresseur tel que décrit ci-dessus.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés dans lesquels :
- la figure 1 est une demi vue schématique en coupe axiale d'un compresseur de turbomachine selon la technique antérieure,
- la figure 2 est une demi vue schématique en coupe axiale d'un compresseur de turbomachine selon l'invention, et
- la figure 3 est une vue à plus grande échelle du détail I₃ de la figure 2.

### DESCRIPTION DETAILLEE

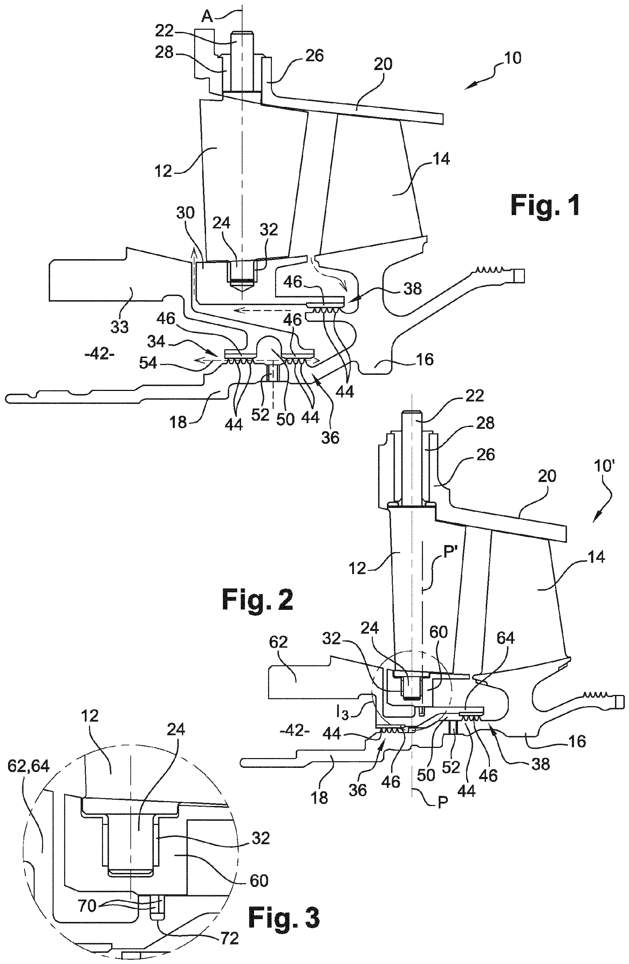

On se réfère d'abord à la figure 1 qui représente un compresseur 10 de turbomachine selon la technique antérieure, pour un aéronef. Ce compresseur 10 est ici partiellement représenté et comprend une rangée annulaire amont d'aubes de stator 12 à calage variable et une rangée annulaire aval d'aubes de rotor 14. L'amont et l'aval font référence au sens d'écoulement de l'air dans le compresseur, qui est de gauche à droite sur le dessin.

Les rangées d'aubes 12, 14 s'étendent autour de l'axe longitudinal de la turbomachine. Les aubes de rotor 14 sont sensiblement radiales et sont portées par un disque 16, l'ensemble comportant le disque et les aubes 14 formant une roue de rotor du compresseur. La roue est solidaire d'un arbre de rotor 18 et est entourée par un carter de stator 20 qui entoure également la rangée d'aubes de stator 12.

Les aubes de stator 12 sont sensiblement radiales et comportent à chacune de leurs extrémités radialement interne et externe un pivot cylindrique radial 22, 24. Les pivots 22, 24 de chaque aube 12 définissent l'axe A de rotation et de calage angulaire de l'aube.

Le pivot cylindrique externe 22 ou pivot de commande de chaque aube 12 est engagé dans le logement d'une cheminée cylindrique 26 du carter 20 et est centré et guidé en rotation dans cette cheminée par une douille cylindrique 28 montée autour du pivot externe 22.

L'extrémité radialement externe du pivot externe 22 est destinée à être fixée à une extrémité d'une biellette dont l'autre extrémité est reliée à un anneau de commande (non représenté) qui s'étend autour de l'axe de la turbomachine, à l'extérieur du carter 20. Un déplacement angulaire de l'anneau de commande autour de l'axe de la turbomachine se traduit par une rotation des biellettes autour des axes A des aubes 12 et par l'entraînement en rotation des aubes 12 à calage variable autour de ces axes.

Le pivot cylindrique interne 24 ou pivot de guidage est engagé dans un logement cylindrique d'un anneau flottant 30 et est centré et guidé en rotation dans ce logement par une douille cylindrique 32.

Un moyen d'étanchéité 38 est monté entre l'anneau flottant 30 et le disque 16, et deux autres 34 et 36 entre une pièce de stator 33 et l'arbre 18. Dans la technique actuelle représentée en figure 1, le moyen d'étanchéité 38 comprend un joint à labyrinthe 38 qui évite la recirculation d'air provenant de la veine du compresseur, de l'aval vers l'amont, entre l'anneau flottant 30 et le disque 16. Ce joint à labyrinthe 38 comporte des léchettes annulaires 44 portées par le disque 16 et coopérant avec une couche annulaire 46 de matière abradable portée par l'anneau flottant 30.

Les autres moyens d'étanchéité sont des joints à labyrinthe 34, 36 et empêchent le passage d'huile entre l'anneau flottant 30 et la pièce de stator 33, en particulier depuis l'amont où est située une enceinte 42 de lubrification d'un palier de guidage de l'arbre 18, dans laquelle règne un brouillard d'huile. Ces joints à labyrinthe 34, 36 comportent chacun des léchettes annulaires 44 portées par l'arbre 18 et coopérant avec une couche annulaire 46 de matière abradable portée par la pièce de stator 33.

Les joints 34, 36 sont espacés axialement l'un de l'autre et définissent entre eux une cavité annulaire 50 destinée à être alimentée en air comprimé et à être donc pressurisée. L'arbre 18 est tubulaire et comprend un orifice radial 52 dont l'extrémité radialement externe débouche dans la cavité 50 pour son alimentation en air comprimé, cet air étant destiné à s'écouler vers l'amont et vers l'aval et à traverser les joints 34, 36 (flèches 54) pour empêcher le passage d'huile à travers eux, en particulier l'huile issue de l'enceinte amont 42.

L'invention permet de réduire l'encombrement, en particulier radial, de l'anneau flottant et d'envisager une réduction de son diamètre externe en vue de l'augmentation de la section de passage et donc du débit d'air du compresseur. Ceci est rendu possible grâce à l'interposition d'une pièce annulaire de stator entre l'anneau flottant et le stator.

Les figures 2 et 3 représentent un mode de réalisation de l'invention. Dans ces figures, les éléments déjà décrits dans ce qui précède sont référencés par les mêmes chiffres de références et ne seront pas décrits dans ce qui suit. La description qui précède, relative à la technique antérieure, s'applique donc à ces éléments.

Dans l'exemple représenté, l'anneau flottant 60 entoure une partie aval 64 d'une pièce annulaire de stator 62 qui, elle, s'étend autour de l'arbre 18. L'anneau flottant 60, la pièce de stator 62 et l'arbre 18 sont coaxiaux. L'anneau flottant 60 et la partie amont de la pièce de stator 62 reconstituent une partie de la veine du compresseur 10'.

Le pivot cylindrique interne 24 de chaque aube 12 est engagé dans un logement cylindrique de l'anneau flottant 60 et est centré et guidé en rotation dans ce logement par une douille cylindrique 32 (optionnelle).

Les (seconds) moyens d'étanchéité qui comprennent deux joints à labyrinthe 36, 38 sont montés entre la pièce de stator 62 et l'arbre 18, et en particulier entre la partie aval 64 de cette pièce 62 et l'arbre 18. Chacun de ces joints 36, 38 comprend des léchettes 44 et une couche abradable 46, comme décrit dans ce qui précède.

Les (premiers) moyens d'étanchéité 70, qui évitent la recirculation d'air provenant de la veine du compresseur 10', de l'aval vers l'amont, sont ici montés entre l'anneau flottant 60 et la pièce de stator 62, et plus précisément entre la périphérie interne de l'anneau flottant 60 et la partie aval 64 de la pièce 62.

Dans l'exemple représenté, ces moyens d'étanchéité à l'air comprennent des segments annulaires 70 qui sont montés dans une gorge annulaire 72 de la partie aval 64 de la pièce de stator 62, cette gorge annulaire 72 débouchant radialement vers l'extérieur.

Les segments d'étanchéité 70 sont ici au nombre de deux. Chaque segment est fendu et a au repos, à l'état sans contrainte, un diamètre externe supérieur à celui de la gorge 72. L'ouverture des segments permet de faciliter leur montage dans la gorge, le diamètre des segments pouvant être augmenté, par écartement de leurs extrémités circonférentielles libres, au-delà du diamètre externe de la partie aval 64 de la pièce 62. En position de montage, les segments 70 sont contraints radialement et prennent appui par leur périphérie externe sur la périphérie interne de l'anneau flottant 60. Les deux segments 70 sont ici disposés l'un à côté de l'autre, leurs ouvertures pouvant être décalées en direction tangentielle pour éviter le passage d'air à travers celles-ci.

Les segments 70 peuvent se déplacer dans la gorge 72, en particulier en direction circonférentielle. Ils autorisent des déplacements relatifs de l'anneau flottant 60 vis-à-vis de la pièce de stator 62 en fonctionnement. La surface interne de l'anneau flottant 60, destinée à coopérer avec les segments, peut être recouverte d'un revêtement anti friction, tel que du NiCrAIY (alliage à base de nickel, chrome, aluminium et yttrium).

L'anneau flottant 60 et la pièce de stator 62 sont par exemple réalisés en aluminium. Ils peuvent être sectorisés, les secteurs étant fixés les uns aux autres par l'intermédiaire de boulons par exemple.

En variante, les segments 70 pourraient être logés dans une gorge annulaire de l'anneau flottant 60 et coopérer à étanchéité avec la pièce de stator 62.

Dans encore une autre variante, les moyens d'étanchéité entre les corps 60, 62 comprennent au moins un joint annulaire tel qu'un joint torique élastiquement déformable, par exemple en élastomère.

Dans encore une autre variante, la roue à aubes 14 située en aval des aubes 12 à calage variable pourrait être remplacée par un rouet de compresseur centrifuge.

## Revendications

1. Compresseur (10') de turbomachine, comportant au moins une rangée annulaire d'aubes de stator (12) à calage variable, ces aubes étant sensiblement radiales et comportant à leurs extrémités radiales des pivots (22, 24), les pivots radialement externes des aubes étant logés dans des premiers orifices d'un carter de stator (20) et les pivots radialement internes étant logés dans des seconds orifices d'un anneau flottant (60) qui entoure un rotor (18) du compresseur, **caractérisé en ce qu'**une pièce annulaire (62) de stator est intercalée entre l'anneau flottant et le rotor du compresseur, et **en ce que** des premiers moyens d'étanchéité sont montés entre la pièce de stator et le rotor du compresseur, et des seconds moyens d'étanchéité (70) sont montés entre l'anneau flottant et la pièce de stator, les premiers moyens d'étanchéité étant à bagues carbones et définissant une cavité annulaire configurée pour être alimentée en air sous pression.

2. Compresseur (10') selon l'une des revendications précédentes, **caractérisé en ce que** les seconds moyens d'étanchéité comprennent au moins un joint annulaire ou au moins un segment annulaire (70), qui est logé dans une gorge annulaire (72) de la pièce de stator (62) et qui coopère à étanchéité avec l'anneau flottant (60), ou inversement.

3. Compresseur (10') selon la revendication 2, **caractérisé en ce que** les seconds moyens d'étanchéité comprennent deux segments annulaires (70) adjacents et logés dans une même gorge annulaire (72).

4. Compresseur (10') selon la revendication 2 ou 3, **caractérisé en ce que** le ou les segments annulaires (70) coopèrent avec une partie de l'anneau flottant (60) qui est recouverte d'un revêtement anti friction.

5. Compresseur (10') selon l'une des revendications précédentes, **caractérisé en ce qu'**un rouet de compresseur centrifuge ou une rangée annulaire d'aubes de rotor (14) de compresseur axial est monté en aval de la rangée d'aubes (12) à calage variable.

6. Turbomachine, **caractérisée en ce qu'**elle comprend un compresseur (10') selon l'une des revendications précédentes.
